# EUROPÄISCHE PATENTSCHRIFT

(11) **EP 1 076 380 B1**
(45) Veröffentlichungstag und Bekanntmachung des Hinweises auf die Patenterteilung: **20.06.2007**
(21) Anmeldenummer: 99115733.0
(22) Anmeldetag: 10.08.1999
(51) Int. Cl.: H01Q 13/24, H01Q 1/22, G01F 23/284

(54) **Antenne**
Antenna
Antenne

(43) Veröffentlichungstag der Anmeldung: 14.02.2001
(73) Patentinhaber: Endress + Hauser GmbH + Co. KG, 79689 Maulburg (DE)
(72) Erfinder: Burger, Stefan, Dipl.-Ing., 79108 Freiburg (DE); Hardell, Alexander, 79539 Lörrach (DE)
(74) Vertreter: Andres, Angelika Maria

(56) Entgegenhaltungen:
- EP-A- 0 612 120
- EP-A- 0 821 431
- EP-A- 0 922 942
- DE-A- 4 405 855
- DE-U- 29 812 024

## Beschreibung

Die Erfindung betrifft eine Antenne zum Senden von Mikrowellen mit einem einseitig endseitig kurzgeschlossenen Rundhohlleiter, in dem ein Sendeelement zur Einspeisung von Mikrowellen angeordnet ist, einem trichterförmigen sich an ein offenes Ende des Rundhohlleiters anschließendes Horn, dessen Radius in rundhohlleiter-abgewandter Richtung zunimmt, und einem Einsatz aus einem Dielektrikum, der einen ersten zylindrischen Abschnitt aufweist, welcher den Rundhohlleiter ausfüllt, und der einen kegelförmigen Abschnitt aufweist, dessen Spitze in rundhohlleiter-abgewandter Richtung weist.

Derartige, üblicherweise als Hornantennen bezeichnete Antennen, werden z.B. in der Füllstandsmeßtechnik zur Bestimmung eines Füllstandes eines Füllguts in einem Behälter eingesetzt. Dabei werden Mikrowellen mittels einer Antenne zur Oberfläche eines Füllguts gesendet und die an der Oberfläche reflektierten Echowellen empfangen. Selbstverständlich kann eine zum Senden verwendete Antenne ebenfalls zum Empfangen verwendet werden. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgutoberfläche und der Antenne bestimmt.

Zur Bestimmung des Füllstandes können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgutoberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Bei herkömmlichen Hornantennen treten häufig Reflexionen innerhalb der Antennen auf. Reflexionen führen zu einer Veränderung der zu sendenden Mikrowellen, z.B. dazu, daß ein kurzer zu sendender Mikrowellenpuls künstlich verlängert wird. Weiter bewirken diese ungewollten Reflexionen eine Erhöhung des Signaluntergrundes und somit eine Verschlechterung des Signal/Rausch-Verhältnisses.

Eine Veränderung von zu sendenden Mikrowellen kann auch dadurch auftreten, daß unterschiedliche Mikrowellenmode und/oder Anteile eines Mikrowellensignals oder Mikrowellenpaketes mit unterschiedlicher Frequenz sich im Bereich der Einkopplung und/oder im Horn mit unterschiedlichen Geschwindigkeiten ausbreiten. Auch hierdurch kann z.B. ein kurzer Mikrowellenpuls verbreitert werden.

Der kegelförmige Abschnitt des Einsatzes bewirkt zusammen mit dem Horn einen verhältnismäßig kontinuierlichen Übergang der Impedanzen vom Rundhohlleiter bis in den freien Raum. Diese Anpassung kann durch die Wahl eines geeigneten Materials für den Einsatz deutlich verbessert werden, sie ist jedoch auch dann nicht völlig verlustfrei.

In der DE-U 298 12 024 ist eine Antenne zum Senden von Mikrowellen beschrieben mit
- einem einseitig endseitig kurzgeschlossenen Rundhohlleiter,
   -- in dem ein Sendeelement zur Einspeisung von Mikrowellen angeordnet ist,
- einem trichterförmigen sich an ein offenes Ende des Rundhohlleiters anschließendes Horn,
   -- dessen Radius in rundhohlleiter-abgewandter Richtung zunimmt, und
- einem Einsatz aus einem Dielektrikum,
   -- der einen ersten zylindrischen Abschnitt aufweist,
      --- welcher den Rundhohlleiter ausfüllt, und
   -- der einen kegelförmigen Abschnitt aufweist,
      --- dessen Spitze in rundhohlleiter-abgewandter Richtung weist.

Zur Verbesserung der Signalqualität der Antenne wurde bei dieser Antenne das Horn von dem kegelförmigen Abschnitt beabstandet angeordnet.

In der Druckschrift EP-A-0 612 120 wird eine weitere Antenne zum Senden von Mikrowellen-Signalen beschrieben, die ein Sendeelement mit einem stabförmigen rückwärtigen Teil umfaßt, der direkt in eine Spitze übergeht, die mit einem trichterförmig aufgeweiteten Teil des Hohlleiters eine Hornantenne bildet. In der DE-A-44 05 855 ist keine Hornantenne sondern eine Stabantenne zum Senden von Mikrowellen beschrieben. Diesen beiden Antennen ist gemeinsam, daß eine Impedanzanpassung zur Verbesserung ihrer Abstrahleigenschaften für den gewünschten Anwendungsfall schwierig ist.

In den Druckschriften EP-A-0 821 431 und EP-A 0922 942, die als nächstliegender Stand der Technik angesehen wird, werden wieder andere Antennen zum Senden von Mikrowellen-Signalen beschrieben, bei denen die Sendeelemente im Grund der sich öffnenden Trichter der Hornantennen direkt umschlossen werden. Auch hierbei ist die Abstimmung der Sendeelemente auf die Trichter der Hornantennen nicht unproblematisch.

Es ist eine Aufgabe der Erfindung eine Antenne anzugeben, die zu den sendenden Mikrowellen möglichst unverfälscht in den freien Raum abstrahlt und die verlustarm arbeitet.

Gelöst wird diese Aufgabe durch die Merkmale des Anspruchs 1.

Gemäß einer Weiterbildung der Erfindung ist zwischen dem ersten zylindrischen Abschnitt und dem kegelförmigen Abschnitt ein zweiter zylindrischer Abschnitt angeordnet, dessen Durchmesser gleich dem Durchmesser der Grundfläche des kegelförmigen Abschnitts ist.

Gemäß einer Ausgestaltung der Erfindung weist der kegelförmige Abschnitt in axialer Richtung eine Länge auf, die ungefähr gleich der Wellenlänge ist, die zu sendende Mikrowellen im freien Raum aufweisen.

Die Erfindung und deren Vorteile werden nun anhand der Figuren der Zeichnung, in denen zwei Ausführungsbeispiele dargestellt sind, näher erläutert; gleiche Teile sind in den Figuren mit gleichen Bezugszeichen versehen.
- Fig. 1: zeigt eine Anordnung zur Füllstandmessung mit einem mit Mikrowellen arbeitenden Füllstandsmeßgerät;
- Fig. 2: zeigt eine Antenne mit einem Einsatz, der einen ersten zylindrischen Abschnitt und einen kegelförmigen Abschnitt aufweist;
- Fig. 3: zeigt eine Antenne gemäß Fig. 1, bei der zwischen dem ersten zylindrischen Abschnitt und dem kegelförmigen Abschnitt ein zweiter zylindrischer Abschnitt vorgesehen ist; und
- Fig. 4: zeigt eine Antenne mit einem luftgefüllten Hohlleiter.

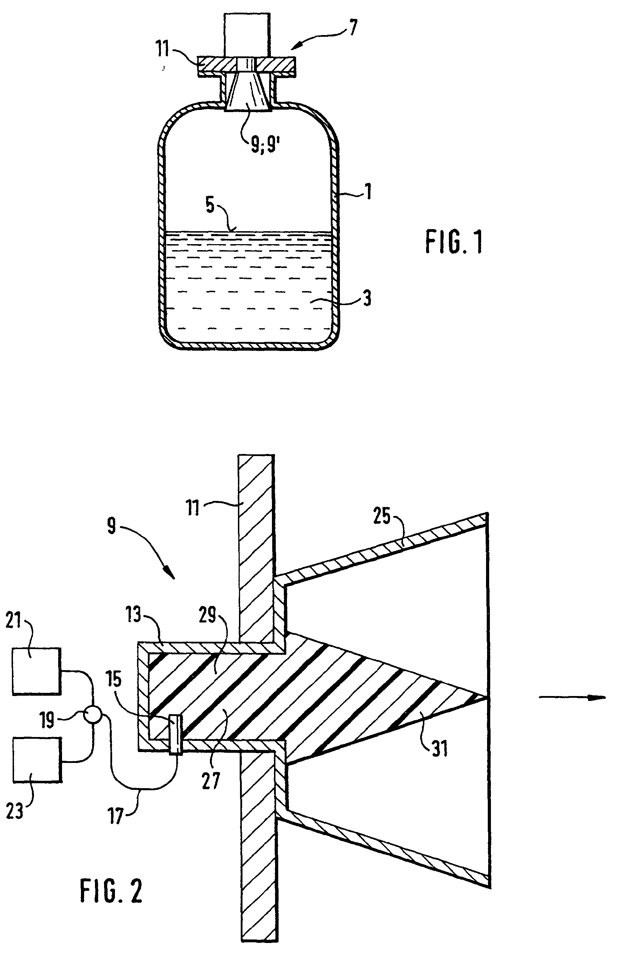

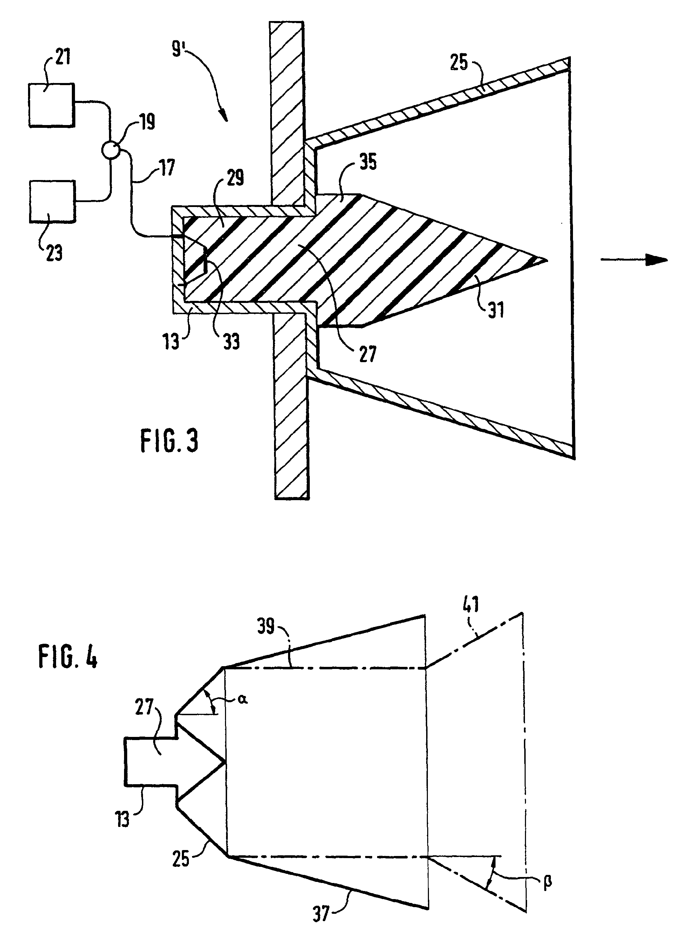

In Fig. 1 ist als ein Anwendungsbeispiel für erfindungsgemäße Antennen eine Anordnung zur Füllstandsmessung dargestellt. Die Anordnung umfaßt einen Behälter 1, in dem sich ein Füllgut 3 befindet. Es ist ein Füllstand 5 dieses Füllguts 3 zu messen. Hierzu ist auf dem Behälter 1 ein mit Mikrowellen arbeitendes Füllstandsmeßgerät 7 angeordnet. Das Füllstandsmeßgerät 7 weist vorzugsweise eine erfindungsgemäße Antenne auf mittels der Mikrowellen in Richtung des Füllguts gesendet und an der Füllgutoberfläche reflektierte Mikrowellen empfangen werden können. Dies ist z.B. eine in Fig. 2 dargestellte Antenne 9 oder eine in Fig. 3 dargestellte Antenne 9. Das Füllstandsmeßgerät 7 ist mittels eines Flansches 11 auf dem Behälter 1 befestigt.

Fig. 2 zeigt einen Schnitt durch ein erstes Ausführungsbeispiel einer erfindungsgemäßen Antenne 9 zum Senden von Mikrowellen. Natürlich kann diese Antenne 9 auch Mikrowellen empfangen. Die Antenne 9 weist einen Hohlzylinder und eine den Hohlzylinder abschließende Rückwand auf. Hohlzylinder und Rückwand bilden zusammen einen einseitig endseitig kurzgeschlossenen Rundhohlleiter 13.

In dem Rundhohlleiter 13 ist seitlich ein Sendeelement 15 zur Einspeisung und zur Aufnahme von Mikrowellen angeordnet. In dem gezeigten Ausführungsbeispiel ist das Sendeelement 15 ein metallischer Stift, der über eine Koaxialleitung 17 mit einer Sende- und Empfangsweiche 19 verbunden ist.

Die Sende- und Empfangsweiche 19 ist mit einer Mikrowellenquelle 21 und mit einer Empfangsschaltung 23 verbunden. Für den Fall, daß die Antenne 9 ausschließlich zum Senden dienen soll, können die Sende- und Empfangsweiche 19 und die Empfangsschaltung 23 entfallen. Soll sie nur zum Empfangen dienen können die Sende- und Empfangsweiche 19 und die Mikrowellenquelle 21 entfallen.

Die Mikrowellenquelle 21 ist beispielsweise ein Pulsradar-Gerät, ein FMCW-Gerät oder ein kontinuierlich schwingender Mikrowellen-Oszillator.

In der Empfangsschaltung 23 wird ein vom Füllgut reflektiertes Echosignal aufgenommen und einer weiteren Verarbeitung zugänglich gemacht.

An ein offenes Ende des Rundhohlleiters 13 schließt sich ein trichterförmiges Horn 25 an. Ein Radius des Horns 25 nimmt in rundhohlleiter-abgewandter Richtung zu. In dieser rundhohlleiter-abgewandter Richtung werden Mikrowellen gesendet. Dies ist durch einen Pfeil angedeutet.

Der Rundhohlleiter 13 und das Horn 25 bestehen aus einem elektrisch leitenden Material, z.B. aus Aluminium oder einem Edelstahl, oder aus einem mit einem leitfähigen Material beschichteten Kunststoff.

In der Antenne 9 ist ein Einsatz 27 aus einem Dielektrikum angeordnet. Als Dielektrikum eignen sich z.B. Fluorkunststoffe wie z.B. Polytetrafluorethylen (PTFE), Keramiken oder Polyphenylensulfid (PPS)

Der Einsatz 27 weist einen ersten zylindrischen Abschnitt 29 auf, der den Rundhohlleiter 13 ausfüllt. Der erste zylindrische Abschnitt 29 weist lediglich eine Ausnehmung zur Aufnahme des Sendeelements 15 auf.

An den ersten zylindrischen Abschnitt 29 grenzt ein kegelförmiger Abschnitt 31 an. Der erste zylindrische Abschnitt 29 und der kegelförmige Abschnitt 31 sind derart zueinander angeordnet, daß deren Rotationssymmetrieachsen zusammenfallen. Der kegelförmige Abschnitt 31 weist eine Spitze auf, die in rundhohlleiter-abgewandter Richtung weist.

Erfindungsgemäß werden die Eigenschaften der Antenne 9 deutlich verbessert, indem eine Grundfläche des kegelförmigen Abschnitts 31 einen Durchmesser aufweist, der größer als ein Durchmesser des zylindrischen Abschnitts 29 ist. Das Dielektrikum ist also am Übergang vom Rundhohlleiter 13 zum Horn 25 verbreitert. Messungen haben gezeigt, daß selbst durch eine geringfügige Verbreiterung deutlich geringere antennenbedingte Verluste auftreten. Ein Grund hierfür ist, daß durch die Verbreiterung eine bessere Impedanzanpassung am Übergang vom Rundhohlleiter 13 zum Horn 25 vorliegt.

Eine weitere Verbesserung ergibt sich, wenn das Horn 25, wie in Fig. 2 dargestellt, über dessen gesamte Länge von dem kegelförmigen Abschnitt 31 in radialer Richtung beabstandet angeordnet ist. Dadurch werden im Bereich der Antenne 9 auftretende Reflexionen reduziert.

In Fig. 3 ist ein weiteres Ausführungsbeispiel einer erfindungsgemäßen Antenne 9 dargestellt. Aufgrund der weitgehenden Übereinstimmung mit dem in Fig. 2 dargestellten Ausführungsbeispiel werden nachfolgend lediglich die Unterschiede näher beschrieben.

Bei dem in Fig. 3 dargestellten Ausführungsbeispiel dient ein Sendedraht als Sendeelement 33.
Dieser ist auf der Rückwand des Rundhohlleiters 13 angeordnet und besteht aus einem leitfähigen Metall, z.B. aus Kupfer, Silber oder Aluminium. Ein erstes Ende des Sendedrahts ist über eine Durchführung, z.B. eine Glasdurchführung, elektrisch leitend mit einem Innenleiter der Koaxialleitung 17 verbunden. Ein Außenleiter der Koaxialleitung 17 ist elektrisch leitend mit der Rückwand des Rundhohlleiters 13 verbunden. Die Rückwand übernimmt die Funktion eines Außenleiters bei dieser koaxialen Durchführung. Ein zweites Ende des Sendedrahts ist elektrisch leitend mit der Rückwand des Rundhohlleiters 13 verbunden, z.B. angelötet. Anstelle des Sendedrahts kann selbstverständlich auch der in Fig. 1 dargestellte metallische Stift verwendet werden.

Der wesentliche Unterschied zu dem in Fig. 2 dargestellten Ausführungsbeispiel besteht darin, daß bei dem Einsatz 27 zwischen dem ersten zylindrischen Abschnitt 29 und dem kegelförmigen Abschnitt 31 ein zweiter zylindrischer Abschnitt 35 angeordnet ist. Der zweite zylindrische Abschnitt 35 weist einen Durchmesser auf, der gleich dem Durchmesser der Grundfläche des kegelförmigen Abschnitts 31 ist. Selbst ein sehr kurzer zweiter Abschnitt 31 genügt, um die Verlustleistung der Antenne 9 deutlich zu reduzieren. Bei einer Antenne 9 bei der der Rundhohlleiter 13 einen Innendurchmesser von 22 mm, die Grundfläche des kegelförmigen Abschnitts 31 einen Durchmesser von 25 mm aufweist, der Einsatz aus Polyphenylensulfid (PPS) besteht und die zu sendenden Mikrowellen Frequenzen im Bereich von 5 GHz bis 10 GHz aufweisen ist z.B. eine Länge von 5 mm ausreichend, um eine Erhöhung der Sendeleistung zu erzielen.

Aufgrund der Verbreiterung des Durchmessers des Einsatzes 27 am Übergang von dem zylindrischen Abschnitt 29 zum kegelförmigen Abschnitt 31 können sowohl das Horn 25 als auch der kegelförmige Abschnitt 31 eine kürzere Länge aufweisen, als dies bei herkömmlichen Antennen möglich ist. Bei erfindungsgemäßen Antennen genügt es, wenn sowohl das Horn 25 als auch der kegelförmige Abschnitt 31 in axialer Richtung eine Länge aufweisen, die ungefähr gleich der Wellenlänge ist, die die zu sendenden Mikrowellen im freien Raum aufweisen. Weisen die zu sendenden Mikrowellen nicht nur eine Frequenz sondern ein Frequenzspektrum auf, so wird für die Bestimmung der Wellenlänge eine mittlere Frequenz zugrunde gelegt. Diese geringe axiale Länge ist z.B. dann von Vorteil, wenn als Werkstoff für den Einsatz 27 ein Material verwendet wird, dessen mechanischen Eigenschaften nicht ohne weiteres eine beliebige Länge erlauben. Dies ist z.B. bei Keramik der Fall.

Sofern die Raumverhältnisse am Einsatzort dies zulassen kann bei den erfindungsgemäßen Antennen in Verlängerung des Horns 25 am Übergang von der Antenne in den freien Raum ein luftgefüllter Hohlleiter angeordnet sein. Fig. 4 zeigt schematisch zwei Ausführungsbeispiele hierfür. Der luftgefüllte Hohlleiter ist z.B. ein weiteres trichterförmiges Horn 37 oder ein gestrichelt eingezeichneter rohrförmiger Rundhohlleiter 39. An ein antennen-abgewandtes Ende des Rundhohlleiter 39 kann ein weiterer, in Fig. 4 ebenfalls gestrichelt eingezeichneter, Trichter 41 anschließen. Ein Öffnungswinkel α des Horns 25 und ein Öffnungswinkel β des Trichters 41 können in Abhängigkeit von den dielektrischen Eigenschaften des Materials des Einsatzes 27 verschieden sein. Damit ist sowohl eine optimale Impedanzanpassung beim Übergang vom materialgefüllten Rundhohlleiter 13 zum luftgefüllten Hohlleiter als auch beim Übergang vom luftgefüllten Hohlleiter in den freien Raum möglich.

Elektromagnetische Wellen breiten sich in Koaxialleitungen im transversal-elektro-magnetischen Mode (TEM-Mode) dispersionsfrei aus. Dieser Feldmode eignet sich daher besonders gut zum Transport von Wellenpaketen oder elektromagnetischen Wellen, deren Frequenzen eine Bandbreite aufweisen. Der Vorteil der dispersionsfreien Ausbreitung ist besonders dann wichtig, wenn die zu sendenden Wellen oder Wellenpakete die erwähnte Bandbreite ihrer Frequenzen aufweisen. Eingespeiste Wellenpakete erfahren dann praktisch keine Verbreiterung, und bei linear frequenzmodulierten Mikrowellen wird eine Linearitätsabweichung weitgehend vermieden.

Zum gerichteten Senden von elektromagnetischen Wellen mittels einer Antenne sind jedoch solche Moden besser geeignet, die eine Abstrahlcharakteristik mit einer ausgeprägten Vorwärtskeule aufweisen. Diese Eigenschaft weist der in Rundhohlleitern ausbreitungsfähige transversal elektrische 11-Mode (TE-11) auf. In dem Rundhohlleiter 13 erfolgt eine Moden-Wandlung, damit der wesentliche Anteil der erzeugten Mikrowellenenergie in die gewünschte Richtung gesendet wird.

In Abhängigkeit von den Abmessungen des Rundhohlleiters, gibt es einen Frequenzbereich, in dem der TE-11-Mode der einzige ausbreitungsfähige Mode ist. Oberhalb dieses Frequenzbereichs sind auch höhere für das gerichtete Senden von Mikrowellen weniger gut geeignete Moden, z.B. der TM-01-Mode, ausbreitungsfähig. Der Frequenzbereich ist zu niedrigen Frequenzen hin durch die Cutoff-Frequenz des TE-11-Modes und zu hohen Frequenzen hin durch die Cutoff-Frequenz des TM-01-Modes begrenzt.

An den Rundhohlleiter 13 schließt das Horn 25 an, welches nur teilweise von dem Einsatz 27 ausgefüllt. Aufgrund der Geometrie von Horn 25 und Einsatz 27 im Inneren des Horns 25 und der Tasache, daß das Horn 25 nur teilweise von einem Dielektrikum ausgefüllt ist, bilden sich im Bereich des Horns 25 den obigen Moden zugeordnete Hybridmode aus. Diese sind der HE-11-Mode und der EH-01-Mode.

Die erfindungsgemäße Verbreiterung des Durchmessers des Einsatzes 27 am Übergangs von dem zylindrischen Abschnitt 29 zum kegelförmigen Abschnitt 31 bewirkt für die Antenne 9, 9 insgesamt eine Absenkung der Cutoff-Frequenz des HE-11-Hybridmodes und eine Anhebung der Cutoff-Frequenz des EH-01-Hybridmodes. Der Frequenzbereich in dem einzig der HE-11-Mode ausbreitungsfähig ist, ist also größer als bei herkömmlichen Antennen.

Bei den oben angegebenen Abmessungen und dem angegebenen Material für den Einsatz 29 der Antenne 9 von Fig. 3 beträgt die Cutoff-Frequenz für den HE-11-Hybridmode etwa 3,5 GHz und für den EH-01-Hybridmode etwa 11 GHz. Der Abstand zwischen den beiden Frequenzen beträgt etwa 7,5 GHz. Hätte die Grundfläche des kegelförmigen Abschnitts 31 dagegen den gleichen Durchmesser wie der zylindrische Abschnitt 29, so würde Cutoff-Frequenz für den HE-11-Hybridmode etwa 4,8 GHz und für den EH-01-Hybridmode etwa 7 GHz betragen. Der Abstand zwischen den beiden Frequenzen beträgt dann lediglich etwa 2,2 GHz. Die Verbreiterung des Durchmessers stellt also eine deutliche Verbesserung hinsichtlich des für eine gerichtete Abstrahlung nutzbaren Frequenzbereiches dar.

## Patentansprüche

1. Antenne (9, 9) zum Senden von Mikrowellen mit
- einem einseitig endseitig kurzgeschlossenen Rundhohlleiter (13),
-- in dem ein Sendeelement (15, 33) zur Einspeisung von Mikrowellen angeordnet ist,
- einem trichterförmigen sich an ein offenes Ende des Rundhohlleiters (13) anschließenden Horn (25),
-- das einen grösseren Durchmesser als der Rundhohlleiter aufweist und in radialer Richtung beabstandet an den Rundholleiter angeschlossen ist,
-- und dessen Radius in rundhohlleiter-abgewandter Richtung zunimmt, und
- einem Einsatz (27) aus einem Dielektrikum,
-- der einen ersten zylindrischen Abschnitt (29) aufweist,
--- welcher den Rundhohlleiter (13) ausfüllt, und
-- der einen kegelförmigen Abschnitt (31) aufweist,
--- dessen Spitze in rundhohlleiter-abgewandter Richtung weist und
--- dessen Grundfläche einen Durchmesser aufweist, der größer als ein Durchmesser des zylindrischen Abschnitts (29) und kleiner als der Durchmesser des an den Rundhohlleiter (13) angeschlossenen Horns (25) ist.

2. Antenne (9, 9) nach Anspruch 1, bei dem zwischen dem ersten zylindrischen Abschnitt (29) und dem kegelförmigen Abschnitt (31) ein zweiter zylindrischer Abschnitt (35) angeordnet ist, dessen Durchmesser gleich dem Durchmesser der Grundfläche des kegelförmigen Abschnitts (31) ist.

3. Antenne (9, 9) nach einem der vorangehenden Ansprüche, bei der der kegelförmige Abschnitt (31) in axialer Richtung eine Länge aufweist, die ungefähr gleich der Wellenlänge ist, die zu sendende Mikrowellen im freien Raum aufweisen.

## Claims

1. An antenna (9, 9) for transmitting microwaves
comprising
- a circular waveguide (13) closed at one end,
-- in which a transmitting element (15, 33) for feeding in microwaves is arranged,
- a funnel-shaped horn (25) adjoining an open end of the circular waveguide (13),
-- which has a larger diameter than the circular waveguide and is connected to the circular waveguide at a distance in the radial direction,
-- and of which the radius increases in the direction directed away from the circular waveguide, and
- an insert (27) made of a dielectric,
-- which has a first cylindrical portion (29)
--- that fills the circular waveguide (13), and
-- which has a conical portion (31),
--- of which the tip is directed in the direction directed away from the circular waveguide, and
--- of which the base surface has a diameter which is larger than a diameter of the cylindrical portion (29) and smaller than the diameter of the horn (25) connected to the circular waveguide (13).

2. An antenna (9, 9) according to Claim 1, in which a second cylindrical portion (35) is arranged between the first cylindrical portion (29) and the conical portion (31), of which the diameter is equal to the diameter of the base surface of the conical portion (31).

3. An antenna (9, 9) according to one of the preceding Claims, in which the conical portion (31) has a length in the axial direction which is approximately equal to the wavelength which the microwaves to be transmitted have in empty space.

## Revendications

1. Antenne (9, 9) destinée à émettre des micro-ondes, avec
- un guide d'ondes circulaire (13) court-circuité en une extrémité,
-- dans lequel est intégré un élément émetteur (15, 33) destiné à l'injection de micro-ondes,
- un cornet (25) en forme d'entonnoir adjacent à une extrémité ouverte du guide d'ondes circulaire (13), lequel cornet présente un diamètre supérieur à celui du guide d'ondes circulaire et est disposé, en direction radiale, à distance du guide d'ondes circulaire,
-- et dont le rayon augmente en direction opposée au guide d'ondes circulaire, et
- une garniture (27) en diélectrique,
-- qui présente une première section cylindrique (29),
--- laquelle remplit le guide d'ondes circulaire (13), et
-- qui présente une section conique (31),
--- dont la pointe est orientée en direction opposée au guide d'ondes circulaire et
--- dont la surface de base présente un diamètre, qui est supérieur au diamètre de la section cylindrique (29) et inférieur au diamètre du cornet (25) disposé de façon adjacente au guide d'ondes circulaire (13).

2. Antenne (9, 9) d'après la revendication 1, pour laquelle une deuxième section cylindrique (35) est disposée entre la première section cylindrique (29) et la section conique (31), deuxième section dont le diamètre est égal au diamètre de la surface de base de la section conique (31).

3. Antenne (9, 9) d'après l'une des revendications précédentes, pour laquelle la section conique (31) présente en direction axiale une longueur, qui est à peu près égale à la longueur d'onde, que présentent les micro-ondes à émettre dans l'espace libre.
